# EUROPÄISCHE PATENTANMELDUNG

(11) **EP 0 841 560 A2**
(43) Veröffentlichungstag der Anmeldung: **13.05.1998**
(21) Anmeldenummer: 97119254.7
(22) Anmeldetag: 04.11.1997
(51) Int. Cl.: G01N 21/89

(54) **Vorrichtung zur optischen Untersuchung der Oberfläche von Rohren**

(30) Priorität: 07.11.1996 DE 19645833
(71) Anmelder: Hewing GmbH, D-48607 Ochtrup (DE)
(72) Erfinder: Rose, Thomas, Dr., 48565 Steinfurt (DE); Störmann, Michael, Dipl.-Ing., 48629 Metelen (DE)
(74) Vertreter: Hilleringmann, Jochen, Dipl.-Ing.

(57) **Zusammenfassung**

Die Vorrichtung zur optischen Untersuchung der Oberfläche von Rohren ist mit einem Gehäuse (26) versehen, das einen beidseitig offenen und aus dem Gehäuse (26) herausführenden Durchlaßkanal (52) zum Hindurchbewegen des zu untersuchenden Rohres (14) aufweist. Ferner weist die Vorrichtung mehrere gleichmäßig in Umfangsrichtung um den Durchlaßkanal (52) herum angeordnete Lichtquelle (62) zum Aussenden jeweils eines senkrecht zur Erstreckung des Durchlaßkanals (52) verlaufenden Lichtstreifens (64) auf. Gleichmäßig in Umfangsrichtung um den Durchlaßkanal (52) herum sind mehrere Detektoren (66,68) zum Empfangen von von der Oberfläche des Rohres (14) reflektiertem Licht (72) der Lichtquellen (62) angeordnet. Zwischen den Lichtquellen (62) sind in Transportrichtung des Rohres (14) vor und hinter der Lichtquelle (62) angeordnete Detektoren (66,68) vorgesehen, die in Umfangsrichtung betrachtet beidseitig der Lichtquellen (62) angeordnet sind. Mit den Detektoren (66,68) ist eine Auswerteschaltung zum Empfangen und Auswerten der Ausgangssignale der Detektoren (66, 68) und zur Ermittlung von Oberflächenfehlern (14'') des Rohres (14) anhand der Größe und der Ausgangssignale der Detektoren (66,68) und der Unterschiede in den Ausgangssignalen unterschiedlicher Detektoren (66,68) verbunden.

## Beschreibung

Die Erfindung betrifft eine Vorrichtung zur optischen Untersuchung der Oberfläche von Rohren.

Kunststoffrohre für den Sanitärbereich und für Heizungsanlagen sollten mit einer Diffusionssperrschicht versehen sein, um die Diffusion von Sauerstoff zu unterbinden. Daher werden die Kunststoffrohre nach ihrer Extrusion mit einer Oberflächenbeschichtung aus beispielsweise EVOH versehen. Um zu verhindern, daß mit fehlerhafter Oberflächenbeschichtung versehene Kunststoffrohre in den Handel gelangen, ist es erforderlich, die Oberflächenbeschichtung möglichst fertigungsnah, d.h. unmittelbar nach deren Auftrag optisch auf Oberflächenfehler zu untersuchen. Neben lokalen Verfärbungen der Oberflächenbeschichtung sind als weitere Fehlerarten lokal fehlende Beschichtungen und Verdickungen der Schutzschicht zu verzeichnen. Bisher erfolgte die Untersuchung der Oberfläche von Rohren mittels Videokameras, wobei durch Auswertung der Videobilder Oberflächendefekte erkannt werden konnten. Diese Technik ist sowohl apparativ als auch bezüglich der Datenauswertung verhältnismäßig aufwendig.

Der Erfindung liegt die Aufgabe zugrunde, eine Vorrichtung zur optischen Untersuchung der Oberflächen von Rohren zu schaffen, die eine vergleichsweise einfache Konstruktion bei zuverlässiger Funktionsweise aufweist.

Zur Lösung dieser Aufgabe wird mit der Erfindung eine Vorrichtung zur optischen Untersuchung der Oberflächen von Rohren vorgeschlagen, die versehen ist mit
- einem Gehäuse, das einen beidseitig offenen und aus dem Gehäuse herausführenden Durchlaßkanal zum Hindurchbewegen des zu untersuchenden Rohres aufweist,
- mehreren gleichmäßig in Umfangsrichtung um den Durchlaßkanal herum angeordneten Lichtquellen zum Aussenden jeweils eines senkrecht zur Erstreckung des Durchlaßkanals verlaufenden Lichtstreifens,
- mehreren gleichmäßig in Umfangsrichtung um den Durchlaßkanal herum angeordneten Detektoren zum Empfangen von von der Oberfläche des Rohres reflektiertem Licht der Lichtquellen, wobei zwischen den Lichtquellen zwei in Transportrichtung des Rohres vor und hinter den Lichtquellen angeordnete Detektoren vorgesehen sind, die in Umfangsrichtung betrachtet beidseitig der Lichtquellen angeordnet sind, und
- einer mit den Detektoren verbundenen Auswerteschaltung zum Empfangen und Auswerten der Ausgangssignale der Detektoren und zur Ermittlung von Oberflächenfehlern des Rohres anhand der Größe und der Ausgangssignale der Detektoren und der Unterschiede in den Ausgangssignalen unterschiedlicher Detektoren.

Die erfindungsgemäße Vorrichtung weist ein Gehäuse auf, durch das hindurch sich ein beidseitig offener Durchlaßkanal erstreckt. Durch diesen Durchlaßkanal hindurch wird das zu untersuchende Rohr bewegt. Innerhalb des Gehäuses sind um den Durchlaßkanal herum mehrere Lichtquellen, die insbesondere als Halbleiterlaser ausgebildet sind, angeordnet, wobei die Lichtquellen in Umfangsrichtung gleich verteilt positioniert sind. Die Lichtquellen senden jeweils einen Lichtstreifen bzw. ein Lichtband aus, das in der senkrecht zur Bewegungsrichtung des Rohres verlaufenden Ebene verläuft und senkrecht auf die Umfangsfläche des Rohres auftrifft. Die Breite bzw. Länge jedes Lichtstreifens ist gleich dem bzw. geringfügig kleiner als der Außendurchmesser des Rohres, so daß durch den Lichtstreifen einer Lichtquelle ein schmaler sich über etwa 180° erstreckender Umfangsabschnitt des Rohres beleuchtet wird. Vorzugsweise sind drei bzw. sechs derartige Lichtquellen gleich verteilt in Umfangsrichtung um den Durchlaßkanal herum angeordnet. Zwischen den Lichtquellen sind Detektoren angeordnet, die von den Lichtquellen reflektiertes Licht aufnehmen. Diese Detektoren sind in Transportrichtung des Rohres betrachtet vor und hinter den Lichtquellen angeordnet. Zweckmäßigerweise sind sämtliche Lichtquellen in einer gemeinsamen radial zum Rohr verlaufenden Radialebene angeordnet, während die zwischen den Lichtquellen positionierten Detektoren wechselweise beidseitig dieser Radialebene angeordnet sind. Dabei ist es ferner von Vorteil, wenn jeder Detektor Reflektionslicht von den beiden zu ihm benachbarten Lichtquellen empfängt. Mit den Ausgängen der Detektoren ist eine Auswerteschaltung verbunden, die die Ausgangssignale der Detektoren empfängt sowie zur Ermittlung von Oberflächenfehlern des Rohres auswertet. Die Detektion eines Oberflächenfehlers erfolgt dabei in erster Linie anhand der Veränderung der Intensität des von den Detektoren empfangenen Reflektionslichts. Denn dieses Reflektionslicht ändert seine Intensität kurzzeitig dann, wenn einer der drei eingangs genannten Oberflächenfehler auftritt. Durch einen Vergleich der Größe der Ausgangssignale und/oder Anzahl entsprechender unterschiedlicher Detektoren kann auf das Ausmaß des Oberflächenfehlers geschlossen werden. So beeinflußt beispielsweise ein in Längsrichtung des Rohres verlaufender Schlitz in der Oberfläche des Rohres die Intensität des Reflektionslichts lediglich derjenigen Detektoren, die unmittelbar benachbart zu der Lichtquelle angeordnet sind, deren Licht auf den Schlitz auftrifft. Demgegenüber wirkt sich ein großflächigerer nicht beschichteter Oberflächenbereich des Rohres auch auf die Intensität des Reflektionslichts aus, das von Detektoren empfangen wird, welche weiter beabstandet zu der bzw. den Lichtquellen angeordnet sind, deren Licht direkt auf diesen Oberflächenbereich des Rohres auftrifft/auftreffen.

An dieser Stelle sei darauf hingewiesen, daß es primär bei der erfindungsgemäßen Vorrichtung darum geht, qualitativ zu ermitteln, ob Oberflächenfehler vorhanden sind. Von untergeordneter Rolle ist die quantitative Untersuchung des Typs von Oberflächenfehler.

Die erfindungsgemäße Vorrichtung ist bezüglich ihres konstruktiven Aufbaus denkbar einfach. Ferner erfolgt die Detektion von Oberflächenfehlern zuverlässig, und zwar über den ganzen Umfang des Rohres betrachtet, da die Lichtquellen einander überlappende Umfangsabschnitte des Rohres beleuchten und die Detektoren aufgrund ihrer Anordnung - in Transportrichtung des Rohres betrachtet - vor und hinter den Lichtquellen sowie - in Umfangsrichtung ihrer Anordnung betrachtet - jeweils beidseitig der Lichtquellen in sämtlichen Fällen von ungewollten Oberflächenveränderungen des Rohres Reflektionslicht empfangen, das auf die Oberflächenveränderung zurückzuführen ist. Zweckmäßigerweise erfassen die Detektoren stets ein Grund-Reflektionslicht, und zwar auch bei einem nicht beschädigten Rohr. Damit ist eine einfache Möglichkeit der Funktionsüberprüfung der Detektoren gegeben. Im Falle von auf einen Oberflächenfehler zurückzuführenden Reflektionslicht steigt die Reflektionslicht-Intensität, wodurch der Fehler detektierbar ist. Die "Ansprechschwelle" der Detektoren ist vorzugsweise einstellbar.

Zur weiteren Verbesserung der optischen Eigenschaften der erfindungsgemäßen Vorrichtung ist gemäß einer vorteilhaften Weiterbildung der Erfindung vorgesehen, daß zwischen jedem Detektor und dem Durchlaßkanal optische Elemente wie Linsen o.dgl. angeordnet sind. Diese optischen Elemente brauchen nicht notwendigerweise über gute Abbildungseigenschaften zu verfügen; ihre Aufgabe ist es in erster Linie, möglichst viel Reflektionslicht auf die Detektoren zu richten. Aus diesem Grund reicht es beispielsweise aus, wenn die Linsen als Fresnel-Linsen ausgebildet sind. Da diese Fresnel-Linsen möglichst nahe dem Durchlaßkanal angeordnet werden sollten, um Reflektionslicht einzufangen, hat es sich als vorteilhaft erwiesen, wenn im durchlaßkanalnahen Bereich als halbe Fresnel-Linsen ausgebildete optische Elemente eingesetzt werden. Hierdurch ergibt sich eine kompakte Bauweise. Der Umstand, daß halbe Fresnel-Linsen, d.h. halbkreisförmige Fresnel-Linsen, weniger Licht einsammeln können als vollständige Fresnel-Linsen, wirkt sich bei der erfindungsgemäßen Vorrichtung nicht negativ aus, da die gesammelte Lichtmenge in jedem Fall für die beabsichtigten Zwecke der Oberflächenfehlerdetektion ausreichend sind.

Um den auf Reflektionen an den Innenaufbauten und den Innenwänden des Gehäuses zurückzuführenden Anteil an von den Detektoren empfangenen Licht zu minimieren bzw. gegen Null zu bringen, ist das Innere des Gehäuses zweckmäßigerweise reflektionsarm ausgeführt, was insbesondere durch einen (matt-) schwarzen Anstrich sämtlicher Bauteile (mit Ausnahme der Optik) und Wände erfolgt. Um Außenlicht am Eindringen ins Innere des Gehäuses zu hindern, sind sämtliche Öffnungen in den Gehäusewänden abgeschirmt, was im Falle der Öffnungen für das Rohr z.B. durch Blenden erfolgt.

Wie bereits oben dargelegt, erstreckt sich durch das Gehäuse der erfindungsgemäßen Vorrichtung ein Durchlaßkanal. Durch diesen Durchlaßkanal ist der mit den optischen Elementen versehene Innenraum des Gehäuses von der Gehäuseumgebung abgeschlossen. Der Durchlaßkanal hat also auch die Aufgabe, die optischen Elemente und das gesamte optische System der erfindungsgemäßen Vorrichtung vor Verunreinigungen zu schützen. Der Durchlaßkanal besteht aus einem für die von den Lichtquellen ausgesandte Strahlung transparenten Material. Insbesondere besteht der Durchlaßkanal aus einem transparenten Kunststoffmaterial wie beispielsweise Plexiglas. Zur Reduktion der Gefahr von Staubablagerungen im Durchlaßkanal ist dieser zweckmäßigerweise durchlüftet. Hierdurch wird auch eventuell auftretende Luftfeuchtigkeit aus dem Durchlaßkanal herausgeleitet, so daß eine Kondensatbildung vermieden wird.

Um den Durchlaßkanal reinigen zu können, ist es von Vorteil, wenn der als Schutzrohr ausgebildete Durchlaßkanal abnehmbar am Gehäuse gelagert ist. Das Gehäuse selbst ist zweckmäßigerweise mit einer Tür versehen, um das Innere des Gehäuses von außen zugänglich zu machen. Der Durchlaßkanal ist dabei zweckmäßigerweise an seinem einen axialen Ende an einer Halterung gelagert, die innen an der Tür angebracht ist. Bei von der Halterung gehaltenen Durchlaßkanal erstreckt sich dieser konzentrisch zu und fluchtend mit einer Durchbrechung in der Tür. Eine derartige Durchbrechung ist auch in der der Tür gegenüberliegenden Gehäusewand ausgebildet. Bei geöffneter Tür läßt sich damit das Schutzrohr des Durchlaßkanals auf einfache Weise aus der Halterung herausnehmen, so daß es nun einfach zu reinigen ist.

Die Luft zum Durchlüften des Schutzrohres wird vorteilhafterweise durch Kanäle der Halterung geleitet, die im Bereich des stirnseitigen Endes des Durchlaßkanals enden.

Je nach der Vorbehandlung des zu untersuchenden Rohres können sich im Durchlaßkanal Wassertropfen bilden, die das optische System der erfindungsgemäßen Vorrichtung beeinflussen können. So ist es z.B. denkbar, daß das Rohr vor dem Passieren des Durchlaßkanals ein Kühlbad durchläuft. Sofern die Oberfläche des Rohres Fehler in Form von Vertiefungen aufweist, kann sich dort Kühlwasser sammeln, welches dann in Form von Tropfen abläuft und damit in den Durchlaßkanal gelangt. Zur Abführung derartiger sich auf der Innenseite des Durchlaßkanals absetzender Wassertropfen wird gemäß einer vorteilhaften Weiterbildung der Erfindung vorgeschlagen, in den Durchlaßkanal einen Luftstrom mit steigender Strömungsgeschwindigkeit einzublasen. Dieser Luftstrom durchströmt den bei horizontal ausgerichtetem Durchlaßkanal am tiefsten liegenden untersten Innenbereich des Durchlaßkanals, wo sich die Wassertropfen infolge der Gravitationskraft ansammeln. Der Luftstrom mit allmählich ansteigender Strömungsgeschwindigkeit treibt diese Flüssigkeitstropfen aus dem Durchlaßkanal heraus, so daß dieser wieder trocken ist.

Das obige Ausblasen des Durchlaßkanals erfolgt zweckmäßigerweise bei jedem auftretenden Fehler, da dieser zur Ablagerung eines Wassertropfens führen kann (bei Kühlung des Rohres unmittelbar vor dessen optischer Inspektion).

Nachfolgend wird anhand der Figuren ein Ausführungsbeispiel der Erfindung näher erläutert. Im einzelnen zeigen:
- Fig. 1: eine Anlage zur optischen Untersuchung der Umfangsfläche eines Rohres auf Oberflächendefekte in stark vereinfachter Darstellung,
- Fig. 2: eine perspektivische Ansicht der Vorrichtung zur optischen Untersuchung der Oberfläche eines Kunststoffrohres,
- Fig. 3: einen Vertikalschnitt durch die Vorrichtung gemäß Fig. 2 entlang der Linie III-III,
- Fig. 4: eine Ansicht des optischen Systems der Vorrichtung gemäß Fig. 2 bei geöffnetem Gehäuse in Richtung des Pfeils IV der Fig. 3,
- Fig. 5: in Seitenansicht eine Einheit des optischen Systems bestehend aus Lichtquelle und zwei Detektoren zur Aufnahme von an der Oberfläche des Rohres reflektiertem Licht der Lichtquelle,
- Fig. 6: den in Fig. 5 mit VI bezeichneten Oberflächenbereich des zu untersuchenden Rohres in vergrößertem Maßstab zur Verdeutlichung eines Oberflächendefekts,
- Fig. 7: eine Seitenansicht der Einheit gemäß Fig. 5 in Richtung des Pfeils VII der Fig. 5,
- Fig. 8: eine Draufsicht auf die Einheit gemäß Fig. 5 in Richtung VIII-VIII der Fig. 5 und
- Fig. 9: den in Fig. 3 mit IX gekennzeichneten Bereich in vergrößertem Maßstab zur Verdeutlichung der Halterung des den Durchlaßkanal bildenden Schutzrohrs sowie der Einleitung von Luftströmungen in das Schutzrohr.

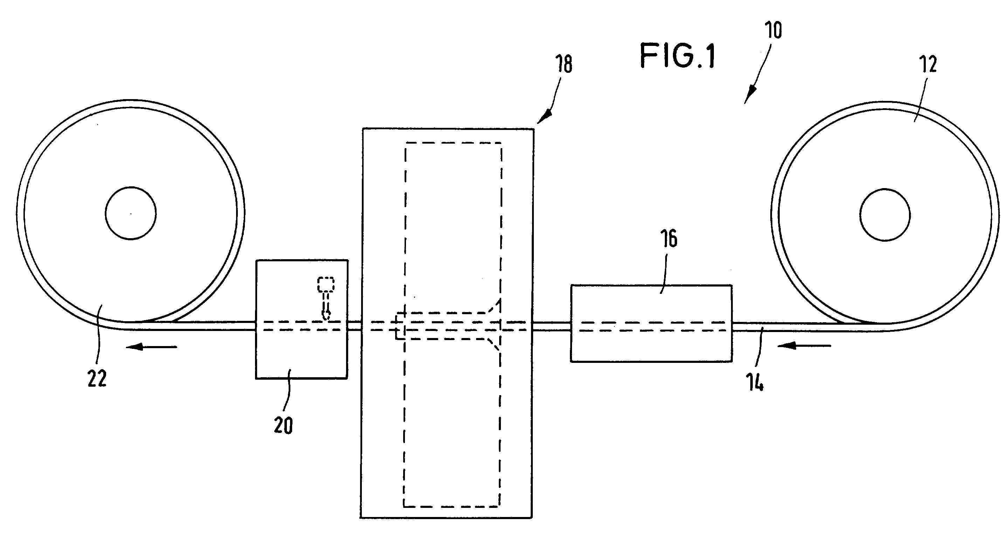

In Fig. 1 ist stark vereinfacht eine Anlage 10 zum Beschichten eines Kunststoffrohres und zur Inspektion der Beschichtung des Kunststoffrohres dargestellt. Die Anlage 10 umfaßt eine Vorratsspule 12, auf der ein extrudiertes Kunststoffrohr 14 aufgewickelt ist. Das Kunststoffrohr 14 wird von der Vorratsspule 12 abgezogen und durchläuft eine bei 16 dargestellte Beschichtungsstation, in der es mit einer Diffusionssperrschicht aus Kunststoff, insbesondere aus EVOH versehen wird. Anschließend wird das beschichtete Kunststoffrohr 14 durch eine bei 18 dargestellte Vorrichtung zur optischen Untersuchung der Oberfläche des Rohres 14 hindurchbewegt. In der Vorrichtung 18 werden Oberflächenfehler der Beschichtung des Kunststoffrohres 14 optisch erkannt. Die fehlerhaften Bereiche werden in einer in Transportrichtung des Kunststoffrohres 14 hinter der Detektorvorrichtung 18 angeordneten Markierungsvorrichtung 20 markiert, indem ein Farbstoff auf das Kunststoffrohr 14 an den defekten Beschichtungsstellen aufgebracht wird. Zusätzlich erfolgt die exakte Protokollierung jedes detektierten Oberflächenfehlers. Anschließend erfolgt die Aufwicklung des Kunststoffrohres auf einer Aufwickelspule 22.

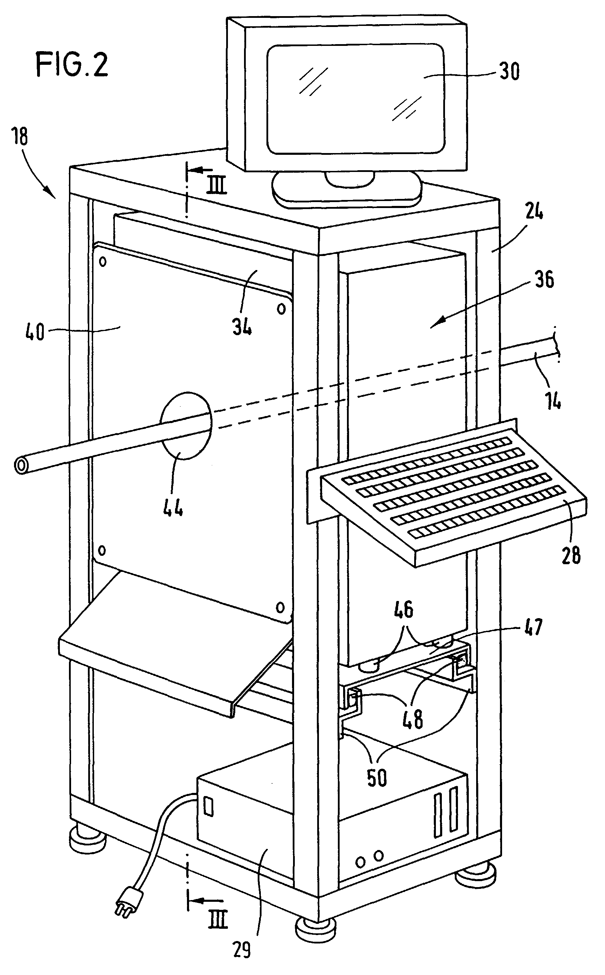

Die Vorrichtung 18 ist in Fig. 2 detaillierter dargestellt. Die Vorrichtung 18 weist ein Gestell 24 auf, an dem ein Gehäuse 26 über Teleskopschienen aus dem Gestell 24 herausziehbar gelagert ist. Innerhalb des Gehäuses 26 befinden sich diverse optische Elemente zur optischen Detektion von Oberflächendefekten des Kunststoffrohres; auf das Innere des Gehäuses 26 wird weiter unten noch genauer eingegangen werden. Die Vorrichtung 18 ist ferner mit einer Tastatur 28 versehen, um Daten in den die Vorrichtung 18 steuernden PC 29 einzugeben. Mit diesem PC 29 ist ferner ein Bildschirm 30 verbunden. Auf diesem Bildschirm 30 lassen sich Meßkurven oder andere Daten visuell anzeigen. Ferner umfaßt die Vorrichtung 18 einen Drucker zur Protokollierung von Meßergebnissen. Dieser Drucker ist in den Zeichnungen nicht dargestellt.

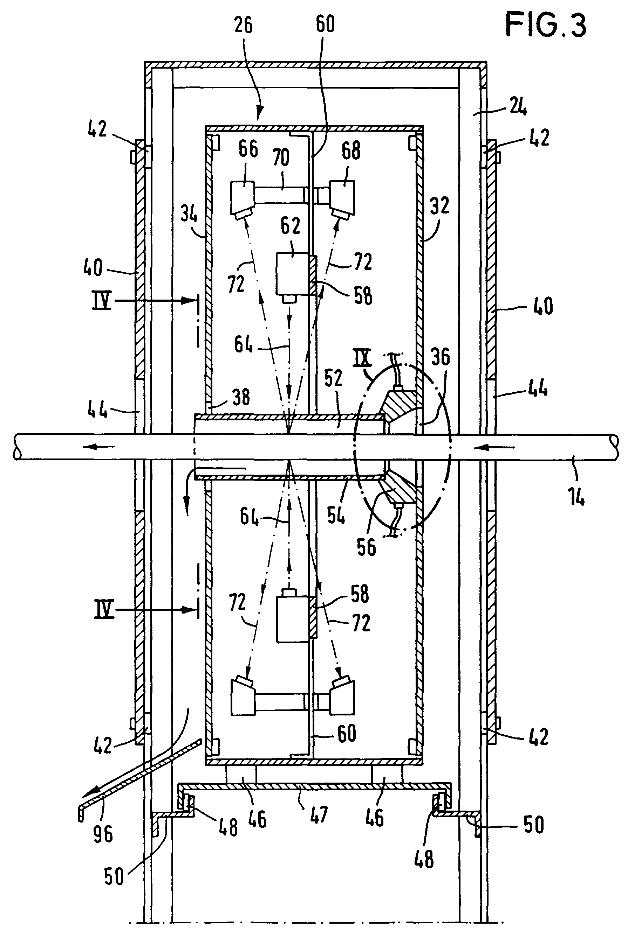

Wie insbesondere anhand von Fig. 3 zu erkennen ist, weist das Gehäuse 26 zwei großflächige einander gegenüberliegende Seitenwände 32,34 auf, die beide als Türen ausgebildet sind. Beide Seitenwände bzw. Türen 32,34 sind mit miteinander fluchtenden mittigen Durchbrechungen 36,38 versehen. Parallel zu den Seitenwänden 32,34 befinden sich außen am Gestell 24 zwei Halteplatten 40, die über bei 42 angedeutete Gummipuffer seitlich am Gestell 24 schwingungsgedämpft angebracht sind. Jede Halteplatte 40 ist mit einer mittigen Durchbrechung 44 versehen, die koaxial zu den Durchbrechungen 36,38 der Seitenwände/Türen 32,34 des Gehäuses 26 angeordnet sind. An den dem Gehäuse 26 zugewandten Innenseiten der Halteplatten 40 befinden sich (nicht dargestellte) Rollenführungen zum Führen des Kunststoffrohres 14 bei dessen Transport durch die Durchbrechungen 44 der Halteplatten 40 und die Durchbrechungen 36,38 des Gehäuses 26 hindurch. Wie in den Fign. 2 und 3 angedeutet, ruht das Gehäuse 26 über Gummifüße 46 auf einem Tablett 47, das über Teleskopschienen 48 mit Halterungen 50 des Gestells 24 verbunden ist.

Wie in Fig. 3 zu erkennen ist, befindet sich im Innern des Gehäuses 26 ein Durchlaßkanal 52, der sich zwischen den beiden Durchbrechungen 36,38 des Gehäuses 26 erstreckt und von einem Schutzrohr 54 sowie einer dieses Schutzrohr 54 haltenden Halterung 56 gebildet ist. Durch diesen Durchlaßkanal 52 hindurch erstreckt sich das zu untersuchende Kunststoffrohr 14. Gemäß Fig. 3 führen zur Halterung 56 Schläuche, über die der Durchlaßkanal 52 mit Luft versorgt wird, worauf weiter unten noch genauer eingegangen werden wird.

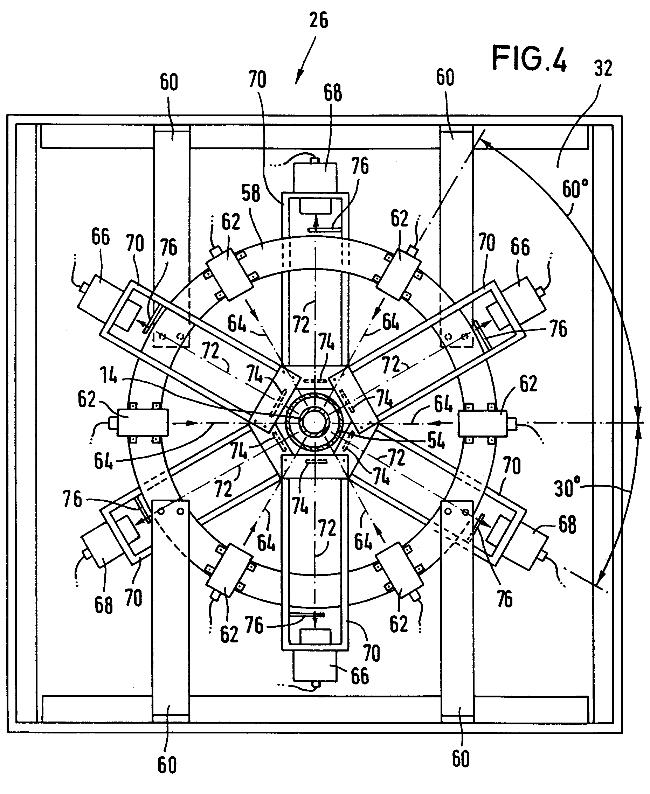

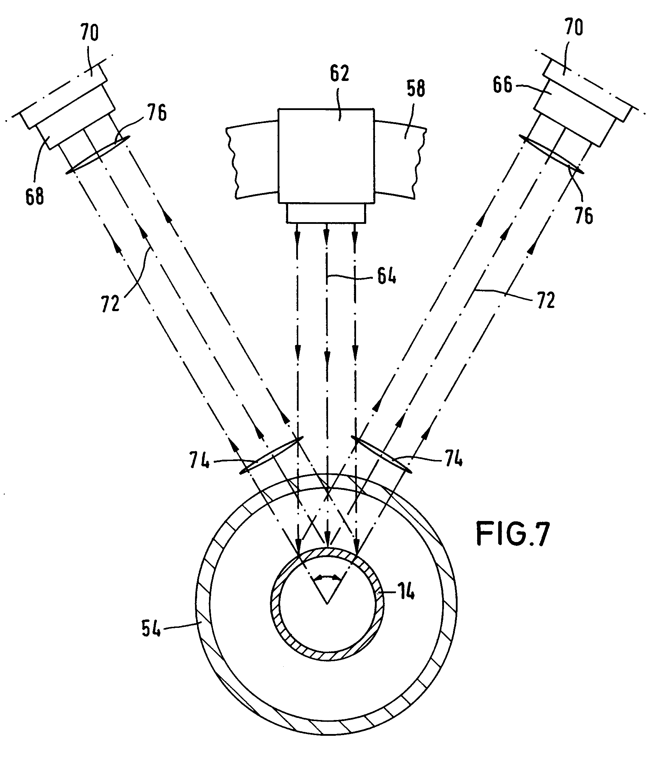

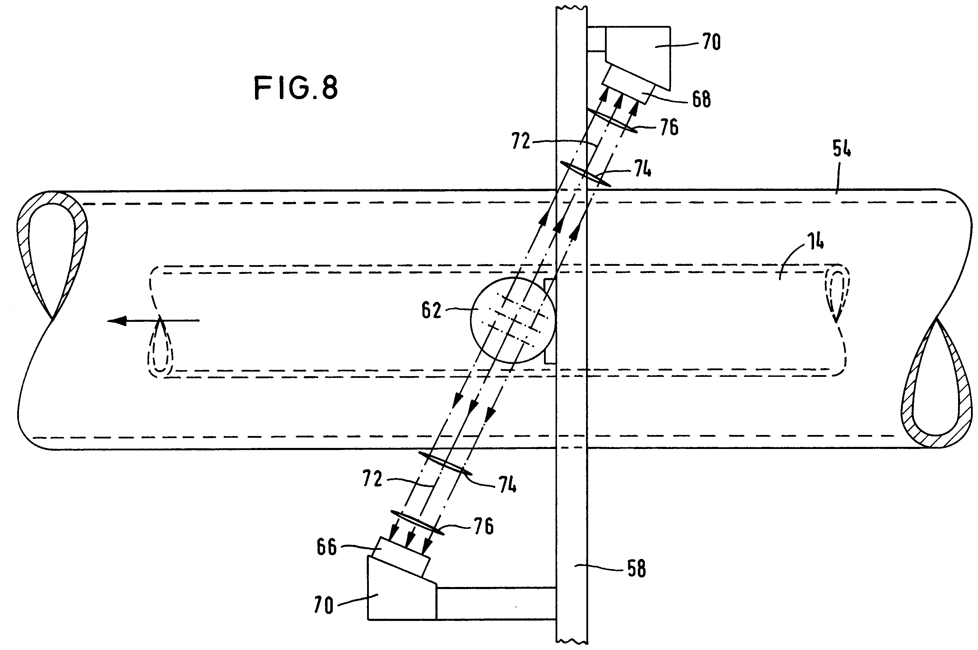

Anhand der Fign. 3 bis 5 und 7 sowie 8 soll nachfolgend auf den Aufbau des optischen Systems der Vorrichtung 18 eingegangen werden. Gemäß Fig. 4, die eine Innenansicht des Gehäuses 26 bei geöffneter Seitenwand 34 zeigt, befindet sich in dem Gehäuse 26 ein Haltering 58, der über Laschen 60 mit dem Gehäuse 26 verbunden ist. Der Haltering 58 ist konzentrisch zum Schutzrohr 54 angeordnet. An dem Haltering 58 sind sechs Halbleiter-Laserlichtquellen 62 befestigt, die gleichmäßig verteilt in Umfangsrichtung des Halterings 58 angeordnet sind und demzufolge einen Winkelabstand von 60° aufweisen. Sämtliche Laserlichtquellen 62 sind zu einer Seite des Halterings 58 angeordnet. Jede Laserlichtquelle 62 erzeugt einen im Querschnitt nach Art eines flachen Streifens ausgebildeten Lichtstrahl 64, dessen Mittelachse radial auf das Schutzrohr 54 und damit auch radial auf das zum Schutzrohr 54 konzentrisch angeordnete Kunststoffrohr 14 auftrifft. Auf diese Weise wird das Kunststoffrohr 14 längs einer Umfangslinie mit dem Licht der Laserlichtquellen 62 belichtet, wobei die einzelnen Lichtstrahlen 64 bzw. "Lichtstriche" einander überlappen und einen schmalen "Beleuchtungsring" auf dem Kunststoffrohr 14 bilden.

Wie in Fig. 4 gezeigt, befinden sich zwischen benachbarten Laserlichtquellen 62 Lichtdetektoren 66,68, die jeweils um 30° versetzt mittig zwischen den Laserlichtquellen 62 angeordnet sind. Die Lichtdetektoren 66,68 sind an den Schmalseiten von rechteckigen Halterahmen 70 angebracht, die ihrerseits am Haltering 58 befestigt sind. Wie man anhand von Fig. 4 erkennen kann, sind drei der sechs Lichtdetektoren, nämlich die Lichtdetektoren 66 in der Darstellung gemäß Fig. 4 vor dem Haltering 58 angeordnet, während die anderen drei Lichtdetektoren (in den Fign. mit 68 bezeichnet) hinter dem Haltering 58 positioniert sind. Jeder Laserlichtquelle 62 sind zwei Lichtdetektoren zugeordnet, von denen der eine - bezogen auf die Transportrichtung des zu untersuchenden Kunststoffrohres 14 - vor der Laserlichtquelle 62 und der andere hinter der Laserlichtquelle 62 angeordnet ist (siehe auch die Darstellungen in den Fign. 3, 5 und 8). Zusätzlich sind die beidseitig einer Laserlichtquelle 62 zugeordneten Lichtdetektoren 66,68 in Umfangsrichtung um jeweils 30° zur Laserlichtquelle 62 versetzt angeordnet. Damit erfassen diese beiden Lichtdetektoren 66,68 unter anderem das von der ihnen zugeordneten Laserlichtquelle 62 ausgesandte und auf der Oberfläche des Kunststoffrohres 14 reflektierte Licht 72. Jeder der Lichtdetektoren 66,68 empfängt also gleichermaßen Reflektionslicht von jeweils zwei unmittelbar benachbarten Laserlichtquellen 62. Dies gilt strenggenommen jedoch nur für den Fall, daß keine Oberflächendefekte am Kunststoffrohr 14 vorhanden sind. Im Falle von Oberflächendefekten verändert sich das Reflektionsverhalten der Oberfläche des Kunststoffrohres 14, so daß von einer Laserlichtquelle 62 ausgesandtes Licht auch von anderen als den unmittelbar benachbarten Lichtdetektoren 66,68 empfangen wird. Dies wiederum wird als Indikator für einen Oberflächendefekt gewertet.

Wie in Fig. 4 gezeigt, befinden sich an den den Lichtdetektoren 66,68 gegenüberliegenden Schmalseiten der Halterahmen 70 mit 74 gekennzeichnete Fresnel-Linsen, die demzufolge möglichst nahe dem Schutzrohr 54 angeordnet sind. Genauer gesagt, sind die Linsen 54 als halbe Fresnel-Linsen ausgeführt, was im Hinblick auf eine kompakte Bauweise und die möglichst nahe Anordnung der Linsen am Schutzrohr 54 von Vorteil ist. Im Strahlengang für das Reflektionslicht 72 können neben diesen halben Fresnel-Linsen 74 weitere Linsen angeordnet sein, wobei insbesondere an ebenfalls als Fresnel-Linsen ausgeführte optische Elemente gedacht ist, die nahe den Detektoren 66,68 angeordnet sind und in den Figuren mit 76 bezeichnet sind. Diese Fresnel-Linsen 74,76 konzentrischen das Reflektionslicht 72 auf die Lichtdetektoren 66,68.

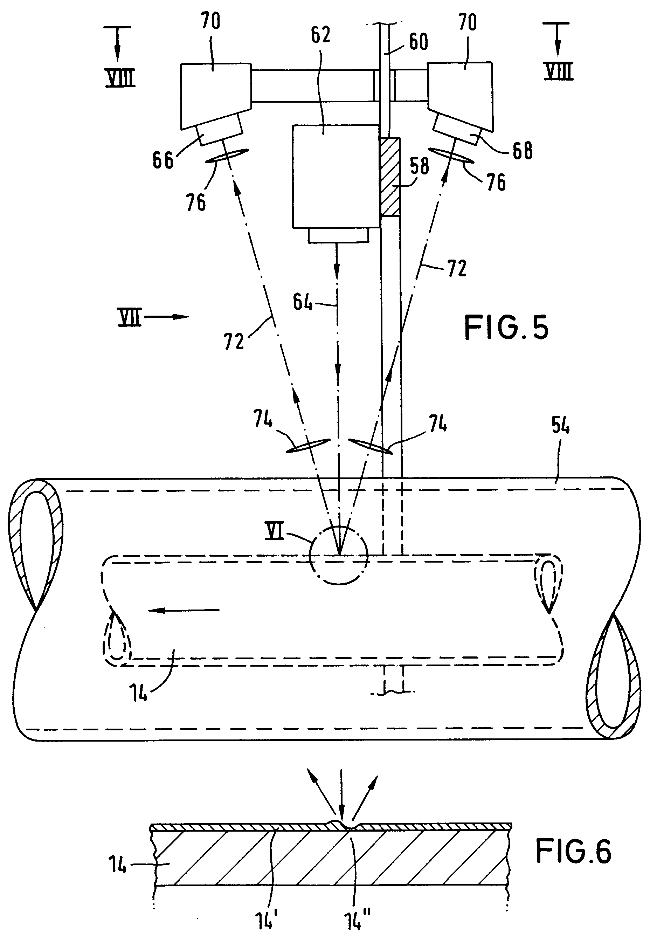

Fig. 6 zeigt das Kunststoffrohr 14 im Schnitt mit seiner in der Beschichtungsstation 16 aufgebrachten Beschichtung 14', wobei diese Beschichtung 14' bei 14'' einen Defekt aufweist, der gemäß Fig. 6 als eine Vertiefung mit sich anschließender Verdickung der Schicht 14' dargestellt ist. Es ist einsichtig, daß derartige Defekte zu Veränderungen des Reflektionsverhaltens der Beschichtung 14' des Rohres 14 führen, die anhand der von den Lichtdetektoren 66,68 meßtechnisch erfaßten Intensität des Reflektionslichts 72 erkannt werden. Die Auswertung dieser Lichtintensitätsveränderungen erfolgt mittels des PC 29, der sowohl mit den Laserlichtquellen 62 als auch mit den Lichtdetektoren 66,68 elektrisch verbunden ist.

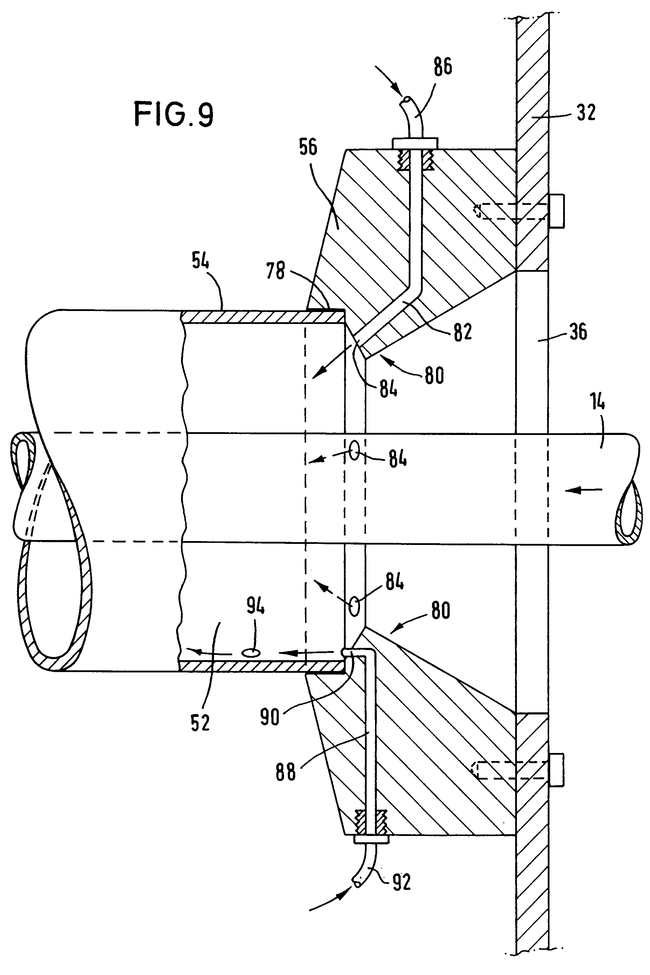

Wie bereits oben kurz erläutert, ist das Schutzrohr 54, das aus einem für das Licht der Laserlichtquellen 62 transparenten Material, insbesondere aus Plexiglas besteht, an der Halterung 56 gehalten, die ihrerseits an der Innenseite der Seitenwand 32 des Gehäuses 26 angebracht ist. Diese Situation ist in vergrößertem Maßstab in Fig. 9 gezeigt. Die Halterung 56 weist eine zylindrische Aufnahme 78 auf, die zum Innern des Gehäuses 26 weist. In diese zylindrische Aufnahme 78 ist das Schutzrohr 54 mit seinem einen axialen Ende reibschlüssig eingesetzt. Die Halterung 56 weist einen radial nach innen über das Schutzrohr 54 überstehenden Überstand 80 auf. Im Bereich dieses Innenüberstandes 80 enden Kanäle 82 für die Zuführung von Druckluft in den Innenraum des Schutzrohres 54, d.h. in den Durchlaßkanal 52. Die Austrittsöffnungen 84 dieser Kanäle 82 verlaufen schrägliegend zur Längsachse des Schutzrohres 54. Außen an die gleichmäßig verteilt angeordneten Kanäle 82 sind Druckluftschläuche 86 angeschlossen. Mitels der über die Schläuche 86 und die Kanäle 82 zugeführten Druckluft wird der Durchlaßkanal 52 von Luft durchströmt, um Staubpartikel o.dgl. Verunreinigungen aus dem Schutzrohr 54 heraus zu transportieren. Wie beispielsweise in Fig. 3 gezeigt, ragt das Schutzrohr 54 mit seinem nicht von der Halterung 56 gehaltenen freien axialen Ende durch die Durchbrechung 38 aus der der Halterung 56 gegenüberliegenden Gehäuse-Seitenwand 34 heraus, so daß die über dieses freie axiale Ende des Schutzrohres 54 herausgeblasenen Verunreinigungen nicht ins Innere des Gehäuses 26 gelangen können.

Je nach der Behandlung des Kunststoffrohres 14 vor dessen Transport durch die Vorrichtung 18 hindurch kann der Fall eintreten, daß sich im Schutzrohr 54 Kondensat bildet oder Wasser vom Rohr 14 abtropft. Dies ist beispielsweise dann der Fall, wenn das Kunststoffrohr 14 beispielsweise zur Kühlung nach dem Aufbringen der Beschichtung oder aus anderen Gründen durch ein Wasserbad hindurchgeführt wird und beim Eintritt in die Vorrichtung 18 noch Oberflächenfeuchtigkeit aufweist. Damit die Wassertropfen und/oder das sich niederschlagende Kondensat nicht zu einer Verfälschung der Meßwerte führen, sollten sie automatisch aus dem horizontal angeordneten Schutzrohr 54 herausgeblasen werden. Zu diesem Zweck wird über einen weiteren Kanal 88 der Halterung 56 in das Schutzrohr 54 bzw. in den Durchlaßkanal 52 Druckluft eingeblasen. Die Austrittsöffnung 90 dieses weiteren Kanals ist nahe der Innenwand des Schutzrohres 54 im Bereich von dessen tiefstliegender Stelle (Kehle) angeordnet, und zwar derart, daß die eingeblasene Druckluft längs dieser tiefstliegenden Stelle über die gesamte axiale Länge des Schutzrohres 54 entlangstreicht. An den Kanal 88 ist ein Druckluftschlauch 92 angeschlossen, über den Druckluft mit einem allmählich ansteigenden Druck bzw. einer allmählich ansteigenden Strömungsgeschwindigkeit zugeführt wird. Auf diese Weise kann ein Wassertropfen 94 (siehe Fig. 9) entlang der Innenfläche des Schutzrohres 54 zu dessen freien axialen Ende geblasen werden, um an diesem axialen Ende, das außerhalb des Gehäuses 26 angeordnet ist, abzutropfen. Der Tropfen 94 fällt durch den Zwischenraum zwischen der Gehäuse-Seitenwand 34 und der Halteplatte 40 auf ein Abtropfblech 96, das schrägliegend oberhalb des Tabletts 47 angeordnet ist und sich unterhalb der Halteplatte 40 bis außerhalb des Gestells 24 erstreckt. Die Versorgung des Schutzrohres 54 mit Druckluft über den Schlauch 92, den Kanal 88 und dessen Austrittsöffnung 90 erfolgt zweckmäßigerweise immer dann, wenn ein Oberflächenfehler detektiert worden ist.

## Patentansprüche

1. Vorrichtung zur optischen Untersuchung der Oberfläche von Rohren mit
- einem Gehäuse (26), das einen beidseitig offenen und aus dem Gehäuse (26) herausführenden Durchlaßkanal (52) zum Hindurchbewegen des zu untersuchenden Rohres (14) aufweist,
- mehreren gleichmäßig in Umfangsrichtung um den Durchlaßkanal (52) herum angeordneten Lichtquellen (62) zum Aussenden jeweils eines senkrecht zur Erstreckung des Durchlaßkanals (52) verlaufenden Lichtstreifens (64),
- mehreren gleichmäßig in Umfangsrichtung um den Durchlaßkanal (52) herum angeordneten Detektoren (66,68) zum Empfangen von von der Oberfläche des Rohres (14) reflektiertem Licht (72) der Lichtquellen (62), wobei zwischen den Lichtquellen (62) in Transportrichtung des Rohres (14) vor und hinter den Lichtquellen (62) angeordnete Detektoren (66,68) vorgesehen sind, die in Umfangsrichtung betrachtet beidseitig der Lichtquellen (62) angeordnet sind, und
- einer mit den Detektoren (66,68) verbundenen Auswerteschaltung (29) zum Empfangen und Auswerten der Ausgangssignale der Detektoren (66,68) und zur Ermittlung von Oberflächenfehlern (14'') des Rohres (14) anhand der Größe und der Ausgangssignale der Detektoren (66,68) und der Unterschiede in den Ausgangssignalen unterschiedlicher Detektoren (66, 68).

2. Vorrichtung nach Anspruch 1, dadurch gekennzeichnet, daß entlang der optischen Achsen der Detektoren (66, 68) zwischen dem Durchlaßkanal (52) und den Detektoren (66,68) Linsen (74,76) angeordnet sind.

3. Vorrichtung nach Anspruch 2, dadurch gekennzeichnet, daß die Linsen (74,76) als halbe Fresnel-Linsen ausgebildet sind, die nahe dem Durchlaßkanal (52) angeordnet sind.

4. Vorrichtung nach einem der Ansprüche 1 bis 3, dadurch gekennzeichnet, daß die in Umfangsrichtung betrachtet aufeinanderfolgenden Detektoren (66,68) wechselweise beidseitig einer gemeinsamen Radialebene angeordnet sind, in der sich die Lichtquellen (62) befinden, und daß zwischen jeweils zwei in Umfangsrichtung benachbarten Detektoren (66,68) eine Lichtquelle (62) angeordnet ist.

5. Vorrichtung nach einem der Ansprüche 1 bis 4, dadurch gekennzeichnet, daß die Lichtquellen (62) Halbleiterlaser aufweisen.

6. Vorrichtung nach einem der Ansprüche 1 bis 5, dadurch gekennzeichnet, daß der Durchlaßkanal (52) von einem transparenten Schutzrohr (54) gebildet ist, durch das koaxial das zu untersuchende Rohr (14) hindurchbewegbar ist.

7. Vorrichtung nach einem der Ansprüche 1 bis 6, dadurch gekennzeichnet, daß der Durchlaßkanal (52) durchlüftet ist.

8. Vorrichtung nach einem der Ansprüche 1 bis 7, dadurch gekennzeichnet, daß der Durchlaßkanal (52) horizontal angeordnet ist und in den am tiefsten liegenden Innenbereich des Durchlaßkanals (52) ein Luftstrom mit ansteigender Strömungsgeschwindigkeit zum Austreiben von sich eventuell im Durchlaßkanal (52) ansammelnden Flüssigkeitstropfen (94) einleitbar ist.

9. Vorrichtung nach einem der Ansprüche 1 bis 8, dadurch gekennzeichnet, daß das Gehäuse (26) mindestens eine Tür (32) aufweist, daß in der Tür (32) des Gehäuses (26) sowie in der der Tür (32) gegenüberliegenden Gehäusewand (34) jeweils eine Durchbrechung (36,38) ausgebildet ist, die beide miteinander fluchten, und daß innen an der Tür (32) des Gehäuses (26) eine Halterung (56) zum abnehmbaren Halten des Durchlaßkanals (52) an dessen einen axialen Ende vorgesehen ist.

10. Vorrichtung nach Anspruch 9 und 7 oder 8, dadurch gekennzeichnet, daß die Halterung (56) Kanäle (82; 88) für die Zufuhr von Luft in den Durchlaßkanal (52) aufweist.
